# EUROPEAN PATENT SPECIFICATION

(11) **EP 0 463 240 B1**
(45) Date of publication and mention of the grant of the patent: **13.12.1995**
(21) Application number: 90201668.2
(22) Date of filing: 23.06.1990
(51) Int. Cl.: G01F 1/82, G01F 1/80, A01F 12/52, A01D 41/12

(54) **Flow metering device**
Durchflussmessgerät
Dispositif de mesure de débit

(43) Date of publication of application: 02.01.1992
(73) Proprietor: NEW HOLLAND BELGIUM N.V., B-8210 Zedelgem (BE)
(72) Inventor: Paquet, Bert J.F., B-8200 Brugge (BE)
(74) Representative: Vandenbroucke, Alberic

(56) References cited:
- DE-A- 2 009 860
- FR-A- 2 285 062
- US-A- 3 807 229

## Description

The present invention is directed to flow metering devices in general and particularly but not exclusively to a tailings flow metering apparatus for use on a combine harvester.

The terms "grain", "straw" and "tailings" are used principally throughout this specification for convenience and it should be understood that these terms are not intended to be limiting. Thus "grain" refers to that part of the crop which is threshed and separated from the discardable part of the crop which is referred to as "straw". Incompletely threshed ears are referred to as "tailings".

In conventional combine harvesters for harvesting crop material, grain is threshed and separated in a threshing and separating mechanism and the separated grain, together with impurities of all sorts, such as chaff, dust, straw particles and tailings, is fed to a cleaning mechanism for cleaning. Clean grain is collected below the cleaning mechanism and fed to a graintank for temporary storage. The tailings are separated from the clean grain and impurities by means of sieves and provisions are taken for recycling the tailings through the combine harvester for reprocessing. This reprocessing involves either recycling the tailings through the threshing and separating mechanism or treating them in a separate tailings rethresher means.

The amount of tailings separated by the cleaning mechanism is determined by the setting of the sieve openings. It is desirable to adjust the sieves in such a manner that the cleaning losses are minimal while at the same time the grain sample in the graintank is acceptable. Therefore, in practice, a certain amount of tailings flow must be accepted in order to reach a practical compromise between cleaning losses and grain sample at a satisfactory capacity level of the combine harvester.

It is generally accepted that the weight rate of the tailings flow may amount to a certain percentage (e.g. in the range of 5 to 10 %) of the grain flow towards the graintank. It is believed that, under such operating conditions, an optimum performance of the combine harvester with regard to capacity and acceptable cleaning losses can be obtained. Indeed, when the tailings flow is too high, then the cleaning mechanism not only has to deal with material which enters the combine for the first time, but also has to reprocess a considerable amount of tailings which, over and over again, recycle through the machine. It will be evident that, under such operating conditions, the cleaning mechanism is used ineffectively resulting in the combine harvester being robbed of capacity. Moreover, a constant overload of the cleaning mechanism ultimately may lead to an incremental rise of the tailings flow ending up with excessive cleaning losses and finally also with blockages of the tailings return system.

On the other hand, a too low tailings flow level could mean that the cleaning mechanism performs inadequately in that a lot of tailings are simply let through and are conveyed together with the clean grain to the graintank. This, of course, shows off in an unacceptable grain sample. If the latter is acceptable however, and if also the cleaning losses are acceptable, then the low tailings flow could be indicative of the combine capacity being insufficiently utilized.

Yet, when harvesting crop material with a combine harvester, the operator is not readily able to determine the amount of tailings being recycled. An extreme method of nonetheless obtaining an indication of the tailings flow consists in an instantaneous shut down of the combine engine during the harvesting operation (so called "kill-stop") whereby all driven combine components come to an immediate stop. A glance in the tailings return system then may provide a very subjective and trifling indication of the volume of tailings being conveyed. However, weight and weight rates are preferred by the operator. Moreover, it will be appreciated that the above method is not to be recommended from a technical and functional point of view.

In case provisions are taken for diverting the tailings return system over the operator's platform, then the operator has the possibility to observe the tailings flow in the return system on-the-go. However, in a fast moving transport element, only volumes of tailings can be estimated which do not allow for any reliable quantification and do not provide any correlation to the clean grain being harvested.

Instead of diverting the tailings flow, another person could assist the operator by running along the combine harvester during operation and also observe the tailings flow in the return system on-the-go. This method however suffers from the same disadvantages as discussed hereabove and moreover is very impractical and extremely dangerous. Without doubt, it therefore should be avoided.

Various attempts have already been made to provide material flow metering devices. Some of the prior art devices provide volumetric measurements. However, as said already, weights and weight rates are preferred over volumetric measurements. Conversion of volume to weight is, of course, possible by using the specific weight figures for the material being conveyed. However, specific weight figures vary very substantially whereby it is necessary to also measure these values. In practice, it has been found that the conversion of volume to weight seldomly is done accurately and often is a cause for substantial errors.

The same type of inaccuracies occur, when sensors are used to monitor the thickness of a material flow in a duct. Such system is disclosed in FR-A-2.285.062, wherein two capacitive switches sense the material layer at different levels. There is no effective measurement of the thickness of the layer, as only two extreme conditions are monitored. Moreover, the use of capacitive sensors is subject to variations caused by varying material properties, such as specific volume and humidity. The thickness of the layer is influenced by the flow speed, which in turn is influenced of the variable friction properties of the crop material. This system provides no reliable output for the calculation of mass flows.

In ISA Transactions Vol. 5. No. 1 dd January 1966 a mass flowmeter for granular material is shown of which the measuring principle is based on an angular momentum change. The meter consists of a set of vertical vanes forming a rotor which is rotated around a vertical shaft by a synchronous motor. The granular material of which the flow rate is to be determined, falls on a core at the top of the rotor and is then directed into the top of the rotating vanes near the axis of rotation. The material slides along the vanes and is thrown from the device at the outer radius thereof. The motor which drives the rotor by means of a flat belt, is rigidly connected to a supporting shaft onto which the rotor is rotatably mounted. The change in angular momentum of the granular material passing through the meter causes a torque in the supporting shaft, which is registered by means of strain gauges on said supporting shaft.

It is observed that the meter just described has only limited use for stationary machinery as not only the rotor but also the material entrance always should be positioned perfectly vertically. Indeed, since the measuring technique requires that the granular material falls onto the rotor structure i.e. enters the flowmeter under influence of gravitational forces only, an inclination of the rotor away from the vertical is not allowed as this would disturb the flow rate measurements. This prior art meter furthermore also suffers from the disadvantage that vibrations of the motor could overshadow the created torque, especially when only small amounts of material are conducted through the rotor. In addition, it must be considered that the measured torque consists of the rotor drive torque on the one hand but also of the empty running motor torque on the other hand. As the latter may equal or even exceed the former, inaccurate results are likely to be obtained. Also, inherent to the measuring principle, the motor for driving the meter should be located in the immediate vicinity thereof as the path for transmitting the torque should be limited to the drive belt and the motor support only.

A mass flow meter for fluids, based on the same principle of angular momentum change, is disclosed in US-A-3.807.229. The meter comprises a hollow drum, which is rotated by an electrical motor inside a tubular housing. The drum is drivingly coupled via a coil spring to an impeller rotor, which is installed coaxially within the same tubular housing. The fluid flows through said housing and the impeller rotor imparts angular momentum thereto. The impeller, because of the coil spring coupling, lags behind the drum by an angle dependent upon this angular momentum and hence of the mass rate of fluid through the impeller. The lag angle is calculated from the signals of a first sensor above the drum and a second sensor above the impeller.

This flow meter would not be suitable for granular material: the length of the housing and the small diameter of the flow channels constitute an insurmountable obstruction to the axial flow of the solid material. Besides a pressure drop over the metering device, no other means are provided for generating a material flow therethrough. Any material which has entered into the impeller, would have a tendency to remain therein and causes friction forces between the impeller and the housing, exceeding the forces caused by the change of angular momentum. The lag angle would not be proportional to the mass flow rate anymore. During operation, the creep of the coil spring would change the zero load position of the impeller, thereby diminishing the accuracy of the load measurement. As a further disadvantage, this configuration requires additional drive means in the form of a motor and a plurality of sensors for establishing the lag signal.

Another type of mass flow meter is shown in DE-A-2.009.860. This meter comprises an impeller rotor which is driven by an electrical motor. Grain and debris, which falls off the straw walkers of a combine harvester, is cleaned by a sieve and fan arrangement and guided towards the impeller, which projects the grain kernels forwardly to the tailings return system. The power, delivered by the motor, is proportional to the mass flow and is measured by means of a Wheatstone bridge, which contains the rotor of said motor.

This embodiment equally comprises additional drive means in the form of a motor. The flow meter has to be readjusted with the adjustable resistor in the Wheatstone bridge. It would not be suited for large amounts of grain and debris, because no means are provided for an efficient evacuation of the material which gets trapped behind the impeller and is rubbed by the impeller paddles, thereby increasing the required motor power. Moreover, a portion of the incoming material would be thrown upwardly by the tips of the paddles and would cause a blockage of the entrance funnel when more material is led thereto.

It therefore is the objective of the present invention to provide a weight rate metering device such as a tailings flow metering apparatus for measuring the tailings flow in a combine harvester, which overcomes the disadvantages described above.

According to the invention, a flow metering device is provided for metering the weight rate of a materials flow in a conveyor means and which comprises:- rotatable impeller means mounted for rotation about a rotation axis on a drive shaft; said impeller means being movable relative to the drive shaft and being operable to propel materials while being subjected to reaction forces exerted by said materials as an result of said propelling action;
- a homing arrangement which, in use of the flow metering device, tends to position the impeller means in a home position corresponding to the idle running condition of the flow metering device and which, when materials are being propelled, permits said reaction forces to displace said impeller means opposite to the action of the homing arrangement; the amount of relative displacement being indicative of the weight rate of the materials flow;
- sensor means operable to detect the amount of displacement of the impeller means relative to the drive shaft and to produce a signal representative thereof; and
- indicator means operatively coupled to the sensor means to provide an indication of the weight rate of the materials flow.

Said flow metering device is characterized in that:
- said homing arrangement is formed by the impeller means being hingeably connected to the drive shaft at an eccentric location relative thereto, or, by the impeller means having a centre of gravity, located at a distance from said rotation axis; and
- the arrangement being such that, during rotation of the impeller means, centrifugal forces acting on the impeller means urge these impeller means towards said home position.

Preferably, the conveyor means comprises an auger rotatably mounted on an auger shaft within an auger trough. The drive shaft supporting the impeller means is formed by an axial extension of said auger shaft whereby the impeller means receive motive power from the auger shaft and are supplied with materials from the auger in a generally axial direction. The impeller means, which are mounted within a generally cylindrical impeller housing comprising a circumferential outlet, are operable to discharge materials through said outlet in a generally radial direction.

The sensor means is coupled to a micro-processor circuitry for processing the signals received therefrom and for steering the indicator means in order to provide an indication of the weight rate of the materials flow. In addition, the same signals are analysed for determining the rotational speed of the auger shaft.

In a preferred embodiment of the present invention, the impeller means form part of an impeller rotor, further also comprising an impeller blade rigidly connected to the drive shaft. The homing arrangement is formed by the impeller means being hingeably connected to the drive shaft at an eccentric location relative thereto in a manner such that during rotation of the impeller rotor, centrifugal forces act upon the impeller means for urging the same towards their home position.
A flow metering device in accordance with the present invention will now be described in greater detail, by way of example, with reference to the accompanying drawings, in which:
Figure 1 is a diagrammatic side elevation view of a combine harvester incorporating the present invention;
Figure 2 is an enlarged sectional side view of a preferred embodiment of the flow metering device according to the invention;
Figure 3 is a cross sectional view taken along the lines III-III of Figure 2; and
Figures 4 and 5 are views similar to respectively Figures 2 and 3 but representing an alternative embodiment.

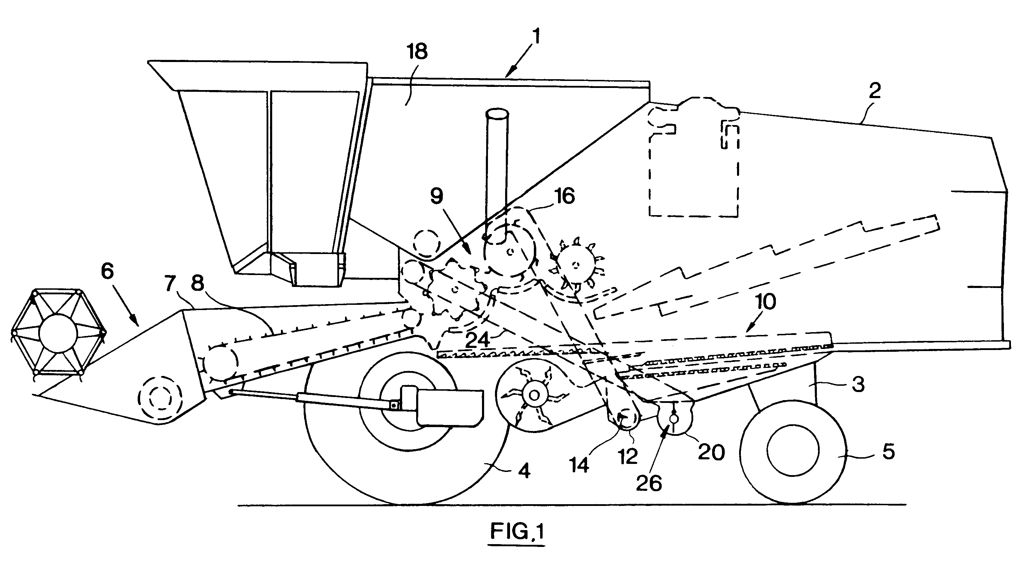

With reference to the drawings, particularly Figure 1, a combine harvester, generally indicated at 1, comprises a base unit 2 including a main chassis or frame 3 supported on a front pair of drive wheels 4 and a rear pair of steerable wheels 5. A conventional crop harvesting header 6 extends forwardly of the frame 3 and is operable to sever standing crop material and initiate the crop harvesting process. A straw elevator 7 interconnects the header 6 and the base unit 2 and houses a conveyor 8 for transferring severed crop material rearwardly from the header 6.

A threshing and separating mechanism 9 is suitably housed within the base unit 2 rearwardly of the straw elevator 7 to receive the severed crop material therefrom and subsequently thresh and separate the edible grain from the straw. The separated grain, together with impurities such as chaff, dust and straw particles falls onto a grain cleaning mechanism 10 which comprises means to separate chaff and other impurities from the grain, and means to separate unthreshed parts, known as tailings. The cleaned grain is collected in a clean grain trough 12 which extends transversely of the combine harvester 1 and contains a clean grain auger 14 for conveying the collected grain towards a clean grain elevator 16 which elevates the clean grain into a graintank 18.

A tailings auger trough 20 also extends transversely of the machine and comprises a tailings auger 22 (not shown in Figure 1) for transporting the collected tailings to one side of the combine harvester 1. At this side, an elevator conveyor 24 is operable to return the tailings towards the threshing and separating mechanism 9 for repeated threshing and separating action.

An additional tailings transfer means indicated at 26 is installed between the tailings auger 22 and the elevator conveyor 24 for ensuring a smooth flow of tailings material in the transitional area between both mentioned components 22 and 24. Besides transporting tailings material, the additional tailings transfer means 26 also is used to measure the weight rate of the tailings flow in a manner which will be described in more details hereinafter.

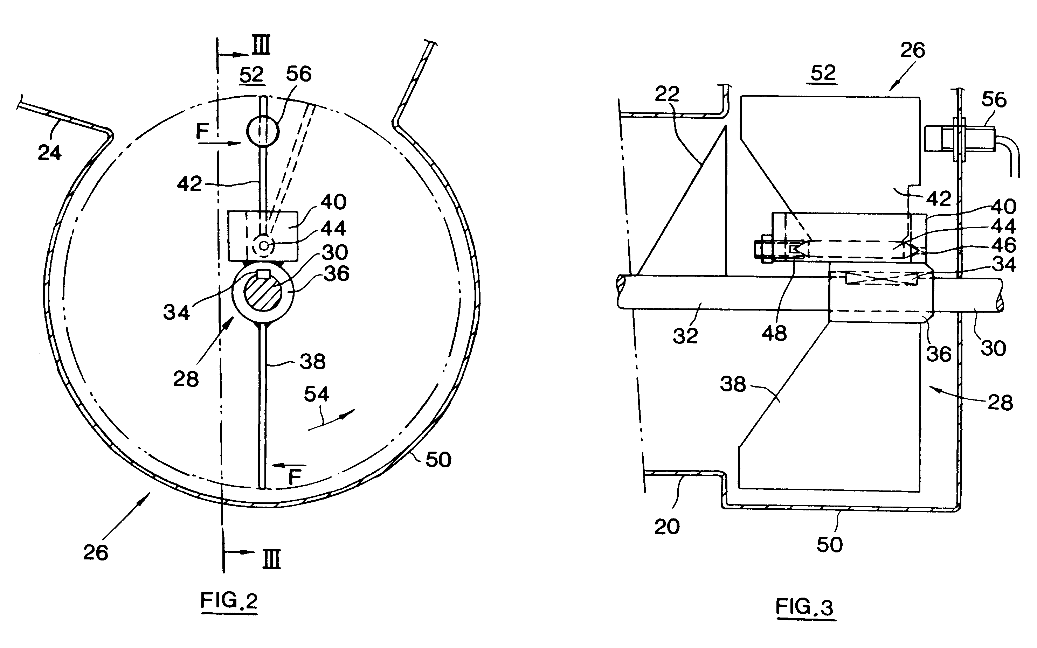

In Figures 2 and 3, a preferred embodiment of the tailings transfer means 26 can be seen, comprising an impeller rotor 28 mounted on an extended end portion 30 of the tailings auger shaft 32 and fixed thereto by means of a key 34. The rotor 28 comprises a central hub 36 with an impeller blade 38 welded thereon in the axial direction. At the diametrically opposite side of the hub 36 relative to the impeller blade 38, a U-shaped member 40 is welded on the hub 36 parallel to the impeller blade 38 and is operable to hingeably support an impeller means 42. To this end, the impeller means 42 is provided with a hinge shaft 44 conically shaped at both ends for being received respectively by a bore 46 in one leg of the U-shaped member 40 and by a hollow threaded rod 48 inserted through a threaded bore in the other leg of the U-shaped member 40. By adjusting the threaded rod 48, the pressure on the conical surfaces of the hinge shaft 44 can be minimized so as to obtain a low friction hinge.

The impeller rotor 28 is surrounded by a cylindrically shaped housing 50 arranged coaxially with the auger shaft 32 and having an outer diameter which is equal or greater than the outer diameter of the tailings auger trough 20. The housing 50 is open at its top portion 52 for allowing tailings to flow from the impeller rotor 28 towards the housing of the elevator conveyor 24.

During the idle running condition of the impeller rotor 28, centrifugal forces acting on the impeller means 42 aim to align the same with the impeller blade 38, as seen in full lines in Figure 2. When tailings are being conveyed, the tailings auger 22 forcefully distributes the transported material over the transitional area between the auger 22 and the impeller rotor 28 whereafter the tailings are forced towards the outer circumference of the housing 50 by the intermediary of the rotor 28, rotating in the direction of arrow 54. The tailings finally are released at the open top 52 of the housing 50 and are received by the elevator conveyor 24 which takes care of further transport as already explained above.

Tailings conveyed by the auger 22 basically only have an axially directed speed. When entering the rotor housing 50 however, the flow path of the tailings is deflected in the rotational direction 54 of the rotor 28 i.e. perpendicular to the tailings engaging surfaces of the impeller blade 38 and the impeller means 42. Changing the angular momentum of the tailings flow results in forces F experienced in the perpendicular direction to the tailings engaging surfaces mentioned hereabove. Considering the impeller blade 38, the force F creates a torque in the shaft end 30 because of the fixed connection between the two components 38 and 30.

The impeller means 42 on the other hand is swung rearwardly opposite to the direction of rotation 54 around the hinge shaft 44 when experiencing the perpendicular force F. It will be appreciated that the more tailings are being conveyed, the larger the forces F will be and consequently the further the impeller means 42 will be inclined rearwardly. One rearwardly inclined position out of a range of possible positions is illustrated in dashed lines in Figure 2. Each such position of the impeller means 42 is defined by an equilibrium of oppositely directed forces acting thereon, being on the one hand the force F proportional to the weight rate of the tailings flow and on the other hand an oppositely directed component of the centrifugal force. Consequently, when the tailings flow is interrupted, the force F disappears, thereby allowing the impeller means 42 to be called back by the centrifugal force to a home position in alignment with the impeller blade 28.

Based on the above reasoning, it will be understood that the amount of displacement of the impeller means 42 relative to the reference impeller blade 38 provides an indication of the weight rate of the material flow. To enable measuring said displacement, a sensor 56 is secured to the rotor housing 50 close to the outer periphery of the rotor 28 and parallel to the auger shaft 32. The sensor 56 is operable to detect the alternating passing-by of the rotor members 38 and 42 and to produce electrical signals in response thereto which are transmitted to signal processing means (not shown), such as a micro-processor for example. Consequently, for each revolution of the rotor 28, the micro-processor is able to calculate the time lapses, on the one hand, between the consecutive passing-by of the impeller blade 38 and the impeller means 42 and subsequently, on the other hand, between the consecutive passing-by of the impeller means 42 and the impeller blade 38.

Assuming that there is no tailings flow and that the rotating impeller means 42 is not influenced by air resistance, the latter will be perfectly aligned with the impeller blade 38, resulting in the two time lapses mentioned above being identical. However, in practice, air is always impelled by the impeller rotor 28 so that the impeller means 42 are slightly inclined rearwardly when seen in the direction of rotation 54 even in the idle running condition of said rotor 28. When starting up the combine harvester 1 and before any tailings are flowing, this deviation is recorded by the micro-processor for taking account thereof in further calculations.

As soon as tailings are being conveyed, the impeller means 42 are forced to a rearwardly inclined position for reasons already explained above. In so doing, the distance from the impeller means 42 to the impeller blade 38, measured along the path of rotation 54, increases, resulting naturally in the time lapse between the passing-by of the impeller blade 38 and the impeller means 42 in front of the detector head to increase with a corresponding amount. It will be appreciated that, at the same time, the distance from the impeller blade 38 to the impeller means 42, measured along the path of rotation 54, decreases, which decreases the time lapse associated therewith.

During normal harvesting operation of the combine harvester 1, the micro-processor continuously derives time lapses from the signals received from the sensor 56; time lapses which vary in accordance with the amount of material being conveyed and which are fed to an algorithm in the micro-processor for providing an indication of the weight rate of the tailings flow. Said indication can be made accessible to the operator by means of a digital display screen (not shown) on the operator's platform. In combination with the visual display, an alarm may sound when an excessive tailings flow, which ultimately could lead to blockages of the tailings return system, is being measured.

The micro-processor further can be relied upon for processing signals received from a clean grain flow metering device and as such providing an indication of the weight rate of the clean grain flow. All this in combination with on-the-go-throughput signals and grainloss signals enables the operator to choose for an optimum condition with regard to harvesting speed and machine settings for harvesting at an acceptable tailings flow level.

Besides providing signals for determining the tailings flow, the sensor 56, in addition, is operable by its nature of detecting rotating elements, to relay signals, eventually the same as referred to hereabove, to the micro-processor for calculating the rotational speed of the impeller rotor 28 and hence of the tailings auger 22. Referring more specifically to Figures 2 and 3, the signals which are created by the impeller blade 38 and the impeller means 42 rotating in front of the sensor head not only are used by the micro-processor to measure the tailings flow, but also serve as a basis for RPM measurements. Indeed, since the impeller blade 38 takes a fixed position in relation to the auger shaft 32, the micro-processor is capable, by analysis of the signals to calculate the rotational speed of the impeller rotor 28 and to steer an RPM monitor for providing an RPM reading.

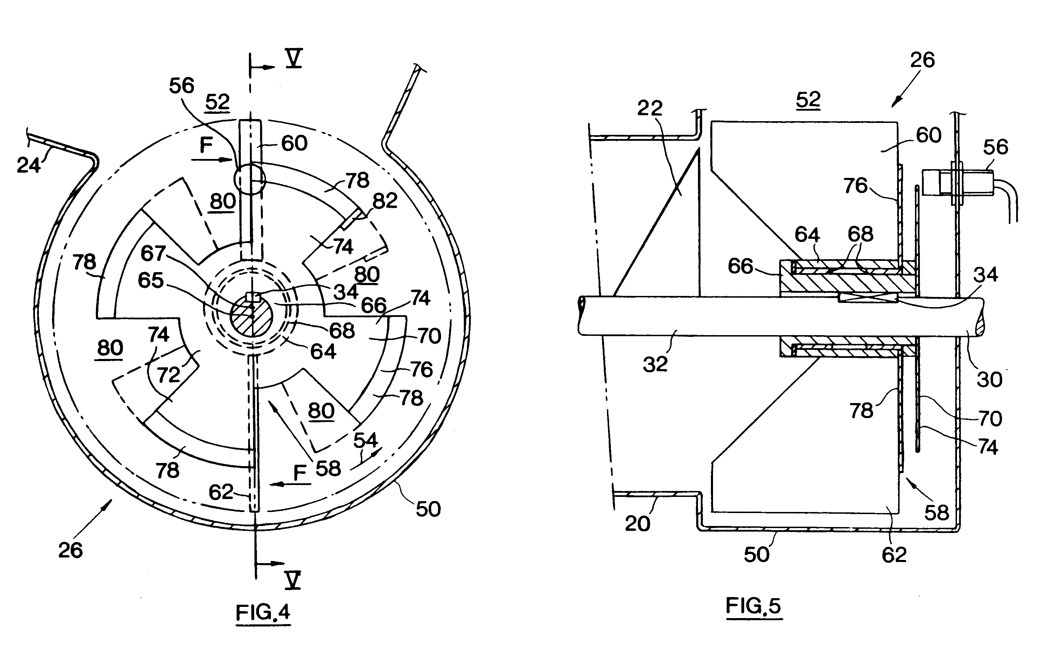

An alternative embodiment of the present invention is shown in Figures 4 and 5. Structural parts which already have been discussed in the first embodiment and which have not been modified, are designated with the same reference numbers. On the extended end portion 30 of the tailings auger shaft 32, an impeller rotor 58 is provided comprising impeller means 60 and 62 in the form of blades, which are rigidly secured, at diametrically opposite sides, to a sleeve member 64 which in turn is rotatably supported on a central hub 66 by means of a pair of bushings 68. The hub 66 is provided with an eccentric bore fit to slide over the shaft end 30 and for being fixed thereto by a key 34. At the right hand side as seen in Figure 5, a cross-shaped gauging member 70 having a circular portion 72 with four equiangularly spaced extensions 74 thereon is connected to the hub 66. Inwardly thereof, a similarly shaped gauging member 76 having four extensions 78 of which the outer edges reach radially further than the extensions 74, is secured to the sleeve member 64. In the position of the impeller rotor 58 shown in Figure 4, the extensions 74 and 78 overlap, leaving bowl-shaped spaces 80 inbetween. One of the extensions 78 of the member 76 comprises an abutment tab 82 for reasons which will be discussed hereafter.

It will be observed in Figure 4 that the impeller blade 60 is made heavier than the blade 62, meaning that the centre of gravity of the impeller unit formed by the blades 60, 62 and the sleeve member 64 is located in the impeller blade 60, somewhere along the centre line thereof. During the idle running condition of the impeller rotor 58, of which Figure 4 is an instantaneous exposure, the shaft end portion 30 together with the rotor 58 are rotated in the direction of arrow 54. Centrifugal forces acting on the centre of gravity of the impeller rotor 58 aim to maintain said rotor 58 in a position of minimal potential energy, being with the centre of gravity in alignment with the connecting line between the rotational centre 65 of the shaft 30 on the one hand and the rotational centre 67 of the sleeve member 64 on the other hand.

Under these operating conditions, the extensions 74 and 78 overlap, as already mentioned. During one revolution of the impeller rotor 58, the sensor 56 therefore detects four times the passing-by of the extensions 74, 78 and four times the absence thereof, namely when the open spaces 80 pass in front of the sensor 56.

Comparable to the situation already described in connection with the first embodiment of Figures 2 and 3, forces F are experienced perpendicularly to the material engaging surfaces of the impeller blades 60 and 62 when tailings are being conveyed by the impeller rotor 58. Said forces F cause the blades 60, 62 and the sleeve member 64 to rotate on the bushings 68 in a clockwise direction as seen in Figure 4, i.e. in a direction opposite to the sense of rotation 54 of the shaft 30. As a result, the centre of gravity of the impeller rotor 58 is moved from its rest or home position whereby the centrifugal force acting thereon is deflected from its pure radial direction, creating a tangential component directed opposite to the forces F. Said tangential component is capable of calling the rotor 58 back to its rest or home position shown in Figure 4 when the tailings flow is interrupted and the forces F cease to exist.

Turning back to the situation in which the rotor 58 is moved from its rest or home position, it will be understood that, by this action, the open spaces 80 gradually are reduced by the extensions 78 which emerge from behind the extensions 74. In Figure 4, a situation is illustrated in dashed lines in which the open spaces 80 are already half-way closed. This situation corresponds to a certain amount of tailings being transported and is captured by the sensor 56 by detecting the open spaces 80 during a reduced period of time when compared to the idle running condition of the impeller rotor 58.

An extreme position of the extension 78 closing off the spaces 80 completely is reached when the abutment tab 82 engages the adjacent extension 74 whereby further backward rotation of the blades 60 and 62 is prevented. This position is obtained when the impeller rotor 58 is operating at full capacity. Since the spaces 80 are non-existent at that moment, the sensor 56 constantly detects the alternating presence of the extensions 74 and 78 without any interruptions inbetween.

It will be appreciated from the above that, according to the amount of free space 80 which is detected by the sensor 56, signals are transmitted to the micro-processor for deriving therefrom the weight rate of the tailings flow.

Besides the function already discussed, the abutment tab 82 further also serves a totally different purpose. Indeed, when starting up the tailings return system, the unit formed by the blades 60, 62 and the sleeve member 64 could have a tendency not to rotate in unison with the hub 66 as there is no structural drive transmitting element between the hub 66 and the sleeve member 64. Accordingly, when the hub 66 and hence the extensions 74 start to rotate while the blades 60, 62 stay immobile by their inertia, one of the extensions 74 approaches and engages the abutment tab 82 whereby the blades 60, 62 are equally forced to rotate. Once in rotation, the centrifugal forces urge the impeller blades 60, 62 forwardly to their home position shown in Figure 4, obviating the further need of the abutment tab 82 as drive transmitting element.

The above described embodiments for measuring the tailings flow in a combine harvester all have the following specific advantages over prior art arrangements :
- very compact in construction;
- less sensitive to variations in inclination when installed on a mobile machine;
- easy to retrofit on existing machines;
- double use of the impeller rotor : as tailings transfer means in the tailings return system and as tailings flow metering device, hence reduced cost price;
- flow metering device also serves as RPM meter, saving extra electronic hardware;
- self-cleaning action whereby adverse effects of encrustation on the impeller rotor are eliminated.

So far, the invention and its operation have been described in connection with a tailings transfer means 26 inbetween the tailings bottom auger 22 and the elevator conveyor 24 for metering the tailings flow. The invention also can be installed at any other location in the tailings return line, provided an auger conveyor is mounted immediately upstream of the flow metering device for positively conveying the tailings thereto. For example, in case the elevator conveyor 24 comprises an auger conveyor, the flow metering device according to the invention advantageously can be installed at the transitional zone between the elevator conveyor 24 and the threshing and separating mechanism 9. More specifically and comparable with the above described embodiments, the flow metering device preferably can be installed on an axial extension of the auger conveyor 24. The orientation of the flow metering device is not really important as the influence of gravity forces is neglectable in comparison with the centrifugal forces which are created by the rotating flow metering device. The invention obviously also effectively can be used in other combinations such as for metering the clean grain flow in the clean grain elevator 16 for example. In this connection, an appropriate place for installing the flow metering device could be found on top of the clean grain elevator 16 where the clean grain is released in the graintank 18.

The flow metering device according to the invention also can be used in other agricultural and non-agricultural equipment which either can be mobile or stationary. Accordingly, the invention is not limited to the application on a combine harvester or any other agricultural machine or equipment handling or processing granular material. It is even not limited to the use for metering granular material as such. Indeed, it also successfully can be used for metering the flow rate of other materials such as powdery material for example.

While the preferred structures, in which the principles of the present invention have been incorporated, are described above and are shown in the accompanying drawings, it is to be understood that the invention is not to be limited to the particular details as described above and shown in said drawings, but that, in fact, widely different means may be employed in the practice of the broader aspects of the invention.

## Claims

1. In a conveyor means (22, 26, 24) for conveying material, a flow metering device (26) for metering the weight rate of a materials flow comprising:
- rotatable impeller means (42/60, 62) mounted for rotation about a rotation axis (-/65) on a drive shaft (30); said impeller means (42/60, 62) being movable relative to the drive shaft and being operable to propel materials while being subjected to reaction forces exerted by said materials as an result of said propelling action;
- a homing arrangement which, in use of the flow metering device (26), tends to position the impeller means (42/60, 62) in a home position corresponding to the idle running condition of the flow metering device (26) and which, when materials are being propelled, permits said reaction forces to displace said impeller means (42/60, 62) opposite to the action of the homing arrangement; the amount of relative displacement being indicative of the weight rate of the materials flow;
- sensor means (56) operable to detect the amount of displacement of the impeller means (42/60, 62) relative to the drive shaft (32) and to produce a signal representative thereof; and
- indicator means operatively coupled to the sensor means (56) to provide an indication of the weight rate of the materials flow;
said flow metering device (26) being characterized in that: - said homing arrangement is formed by the impeller means (42) being hingeably connected to the drive shaft (30) at an eccentric location relative thereto, or, by the impeller means (60, 62) having a centre of gravity, located at a distance from said rotation axis (65); and
- the arrangement being such that, during rotation of the impeller means (42/60, 62), centrifugal forces acting on the impeller means (42/60, 62) urge these impeller means (42/60, 62) towards said home position.

2. A flow metering device according to claim 1 characterized in that it further also comprises a micro-processor circuitry to which the sensor means (56) and the indicator means are coupled for processing the signals received from the sensor means (56) and for steering the indicator means therewith.

3. A flow metering device according to claim 2 characterized in that the micro-processor additionally also is coupled to an RPM monitor and utilizes the signals received from the sensor means (56) to steer said RPM monitor for providing an RPM reading of the drive shaft's rotational speed.

4. A flow metering device according to any of the preceding claims characterized in that :
- the conveyor means (22, 26, 24) comprise an auger (22) rotatably mounted within an auger trough (20) and including an auger shaft (32); and
- the drive shaft supporting the impeller means (42/60, 62) is formed by an axial extension (30) of the auger shaft (32); the arrangement being such that, in use, the impeller means (42/60, 62) receive motive power from said auger shaft (32) and the auger (22) supplies materials to the impeller means (42/60, 62) generally in the axial direction thereof.

5. A flow metering device according to any of the preceding claims characterized in that the impeller means (42/60, 62) are mounted within a generally cylindrical impeller housing (50) comprising a circumferential outlet (52); the impeller means (42/60, 62) being operable to discharge materials through said outlet (52) in a generally radial direction.

6. A flow metering device according to any of the preceding claims and according to the alternative in which the impeller means (42) are hingeably connected to the drive shaft (30) at an eccentric location relative thereto, characterized in that the impeller means (42) form part of an impeller rotor (28), further also comprising an impeller blade (38) rigidly connected to the drive shaft (30).

7. A flow metering device according to claim 6 characterized in that the impeller rotor (28) comprises :
- a central hub (36) keyed to the drive shaft (30); the impeller blade (38) being rigidly connected to said hub (36); and
- a mounting member (40) rigidly connected to said central hub (36) at a generally diametrically opposite location relative to the impeller blade (38) thereon; said impeller means (42) being hingeably connected to said mounting member (40).

8. A flow metering device according to claim 7 characterized in that:
- the mounting member (40) is generally U-shaped and comprises a mounting bore (46) in one limb thereof and a hollow mounting element (48) supported on the other limb thereof in axial alignment with said mounting bore (46) and for adjustment in the axial direction relative to said bore (46); and
- the impeller means (42) comprise a hinge shaft (44) provided with oppositely oriented conical ends hingeably received between said mounting bore (46) and said mounting element (48).

9. A flow metering device according to any of the claims 6 to 8, characterized in that the impeller means (42), when propelling materials, are hinged, under influence of said reaction forces, opposite to the direction of rotation (54) of the impeller rotor (28) away from said home position and towards a lagging position in which an equilibrium is established between said centrifugal forces and said reaction forces; the amount of angular displacement of the impeller means (42) between said home position and said lagging position being detected by the sensor means (56) as a measure for the weight rate of the materials being propelled by the impeller rotor (28).

10. A flow metering device according to any of the claims 6 to 9, characterized in that, in said home position, the impeller means (42) extend generally radially relative to the drive shaft (30).

11. A flow metering device according to any of the claims 1 to 5 and according to the alternative in which the impeller means (60, 62) have a centre of gravity, located at a distance from said rotation axis (65), characterized in that:
- the drive shaft (30) is rotatable around an axis of rotation (65) and comprising bearing means (66) disposed eccentrically with respect to said axis of rotation (65);
- the impeller means (60, 62) comprise a sleeve (64), rotatably mounted on the eccentric bearing means (66), whereby the center (67) of this sleeve (64) is offset with respect to said axis of rotation (65); and
- the impeller means (60, 62) have a center of gravity positioned at a distance from said sleeve center (67).

12. A flow metering device according to claim 11 characterized in that :
- in said home position, the center of gravity of the impeller means (60, 62) is positioned generally along or proximate to the straight line extending through said axis of rotation (65) of the drive shaft (30) and said sleeve center (67); and
- the impeller means (60, 62), when propelling materials, angularly are displaced, under influence of said reaction forces, around said bearing means (66) in the direction opposite to the direction of rotation (54) of the drive shaft (30) away from said home position and towards a lagging position in which an equilibrium is established between said centrifugal forces and said reaction forces; the amount of angular displacement of the impeller means (60, 62) between said home position and said lagging position being detected by the sensor means (56) as a measure for the weight rate of the materials being propelled by the impeller means (60, 62).

13. A flow metering device according to claim 11 or 12 characterized in that :
- the eccentric bearing means on the drive shaft (30) are formed by an eccentric hub (66) keyed on said shaft (30); and
- the impeller means comprise a pair of diametrically opposite impeller blades (60, 62) fixedly attached to said sleeve (64); one of said blades (60) being heavier than the other (62) whereby said center of gravity of the impeller means (60, 62) is offset relative to said sleeve center (67).

14. A flow metering device according to any of the claims 11 to 13 characterized in that :
- a first gauging member (70) is fixedly attached to the drive shaft (30) for rotation in unison therewith; and
- a second gauging member (76) is fixedly attached to the impeller means (60, 62) for movement in unison therewith; said first and second gauging members (70, 76) being disposed for movement in the proximity of the sensor means (56) to permit said sensor means (56) to detect the angular displacement between said first and second gauging members (70, 76).

15. A flow metering device according to claim 14 characterized in that :
- the first and second gauging member are formed by toothed flanges (70, 76) attached to respectively the drive shaft (30) and the impeller means (60, 62) and extending proximate and generally parallel to each other; the teeth (74, 78) of said flanges (70, 76) when seen in the axial direction of the impeller means (60, 62), generally overlapping each other when said impeller means (60, 62) are in said home position and being displaced with respect to each other in accordance with the relative angular displacement of the impeller means (60, 62) under influence of said reaction forces whereby, as seen in said axial direction, the width of the pairs of overlapping teeth (74, 78) is increased accordingly; and
- the sensor means (56) are disposed to detect said variation in said width as a measure for the weight rate of the materials being propelled by the impeller means (60, 62).

16. A flow metering device according to claim 15 characterized in that an abutment member (82) is attached to one of the toothed flanges (70, 76) in a manner for the other toothed flange to abut thereagainst upon said flanges (70, 76) being displaced relative to each other over an angle corresponding to the circumferential width of the spacing (80) between adjacent teeth (74, 78).

17. A flow metering device according to any of the preceding claims characterized in that this device is used on a combine harvester to provide an on-the-go weight rate indication of the tailings return flow and/or the clean grain flow in the machine.

## Patentansprüche

1. Durchflußmeßgerät (26) zur Messung des Gewichtsdurchsatzes einer Materialströmung in einer Fördereinrichtung (22, 26, 24) zur Förderung von Material, mit:
- drehbaren Flügelradeinrichtungen (42/60, 62), die für eine Drehung um eine Drehachse (-/65) auf einer Antriebswelle (30) befestigt sind, wobei die Flügelradeinrichtungen (42/60, 62) gegenüber der Antriebswelle beweglich und betreibbar sind, um Material vorwärts zu bewegen, während sie Reaktionskräften ausgesetzt sind, die von dem Material als Ergebnis der Vorwärtsbewegungswirkung ausgeübt werden,
- einer Rückführanordnung, die im Betrieb des Durchflußmeßgerätes (26) in Richtung auf eine Einstellung der Flügelradeinrichtungen (42/60, 62) auf eine Ruhestellung wirkt, die dem Leerlaufzustand des Durchflußmeßgerätes (26) entspricht, und die es bei der Vorwärtsbewegung von Material den Reaktionskräften ermöglicht, die Flügelradeinrichtungen (42/60, 62) gegen die Wirkung der Rückführanordnung zu bewegen, wobei das Ausmaß der Relativbewegung den Gewichtsdurchsatz der Materialströmung anzeigt,
- einer Sensoreinrichtung (56), die betreibbar ist, um das Ausmaß der Bewegung der Flügelradeinrichtungen (42/60, 62) gegenüber der Antriebswelle (32) festzustellen und ein diese Bewegung darstellendes Signal zu erzeugen, und
- einer Anzeigeeinrichtung, die betriebsmäßig mit der Sensoreinrichtung (56) gekoppelt ist, um eine Anzeige des Gewichtsdurchsatzes der Materialströmung zu liefern,
wobei das Durchflußmeßgerät (26) dadurch gekennzeichnet ist, daß
- die Rückführanordnung dadurch gebildet ist, daß die Flügelradeinrichtungen (42) gelenkig mit der Antriebswelle (30) an einer exzentrischen Stelle bezogen hierzu verbunden sind oder daß die Flügelradeinrichtungen (60, 62) einen Schwerpunkt aufweisen, der in einer Entfernung von der Drehachse (65) angeordnet ist, und
- die Anordnung derart ist, daß während einer Drehung der Flügelradeinerichtungen (42/60, 62) auf die Flügelradeinrichtungen (42/60, 62) wirkende Zentrifugalkräfte diese Flügelradeinrichtungen (42/60, 62) in Richtung auf die Ruhestellung drücken.

2. Durchflußmeßgerät nach Anspruch 1,
dadurch gekennzeichnet, daß es weiterhin eine Mikroprozessorschaltung umfaßt, mit der die Sensoreinrichtung (56) und die Anzeigeeinrichtung gekoppelt sind, um die von der Sensoreinrichtung (56) empfangenen Signale zu verarbeiten und um die Anzeigeeinrichtung hiermit zu steuern.

3. Durchflußmeßgerät nach Anspruch 2,
dadurch gekennzeichnet, daß der Mikroprozessor zusätzlich mit einer Drehzahlüberwachungseinrichtung gekoppelt ist und die von der Sensoreinrichtung (56) empfangenen Signale dazu verwendet, die Drehzahlüberwachungseinrichtung zu steuern, um eine Drehzahlanzeige der Drehzahl der Antriebswelle zu liefern.

4. Durchflußmeßgerät nach einem der vorhergehenden Ansprüche,
dadurch gekennzeichnet, daß:
- die Fördereinrichtungen (22, 26, 24) eine Förderschnecke (22), die drehbar in einer Förderschneckenwanne (20) befestigt ist, und eine Förderschneckenwelle (32) einschließen, und
- die die Flügelradeinrichtungen (42/60, 62) halternde Antriebswelle durch eine axiale Verlängerung (30) der Förderschneckenwelle (32) gebildet ist, wobei die Anordnung derart ist, daß im Betrieb die Flügelradeinrichtungen (42/60, 62) Antriebsleistung von der Förderschneckenwelle (32) empfangen und die Förderschnecke (22) Material an die Flügelradeinrichtungen (42/60, 62) allgemein in dessen Axialrichtung liefert.

5. Durchflußmeßgerät nach einem der vorhergehenden Ansprüche,
dadurch gekennzeichnet, daß die Flügelradeinrichtungen (42/60, 62) in einem allgemein zylindrischen Flügelradgehäuse (50) befestigt sind, das einen am Umfang angeordneten Auslaß (52) aufweist, und daß die Flügelradeinrichtungen (42/60, 62) betreibbar sind, um Material durch den Auslaß (52) in einer allgemein radialen Richtung abzugeben.

6. Durchflußmeßgerät nach einem der vorhergehenden Ansprüche und gemäß der Alternative, bei der die Flügelradeinrichtungen (42) gelenkig mit der Antriebswelle (30) an einer exzentrischen Stelle relativ hierzu verbunden sind,
dadurch gekennzeichnet, daß die Flügelradeinrichtungen (42) einen Teil eines Flügeradrotors (28) bilden, der weiterhin eine Flügelradschaufel (38) aufweist, die starr mit der Antriebswelle (30) verbunden ist.

7. Durchflußmeßgerät nach Anspruch 6,
dadurch gekennzeichnet, daß der Flügelradrotor (28) folgende Teile umfaßt:
- eine in der Mitte liegende Nabe (36), die mit der Antriebswelle (30) verkeilt ist, wobei die Flügelradschaufel (38) starr mit der Nabe (36) verbunden ist, und
- ein Befestigungsteil (40), das starr mit der in der Mitte liegenden Nabe (36) an einer der Flügelradschaufeln (38) allgemein diametral gegenüberliegenden Stelle befestigt ist, wobei die Flügelradeinrichtung (42) gelenkig mit dem Befestigungsteil (40) verbunden ist.

8. Durchflußmeßgerät nach Anspruch 7,
dadurch gekennzeichnet, daß
- das Befestigungsteil (40) allgemein U-förmig ist und eine Befestigungsbohrung (46) in einem ihrer Schenkel und ein hohles Befestigungselement (48) umfaßt, daß auf seinem anderen Schenkel in axialer Ausrichtung mit der Befestigungsbohrung (46) und für eine Einstellung in axialer Richtung gegenüber der Bohrung (46) gehaltert ist, und
- die Flügelradeinrichtungen (42) eine Gelenkwelle (44) aufweisen, die mit entgegengesetzt gerichteten konischen Enden versehen ist, die gelenkig zwischen der Befestigungsbohrung (46) und dem Befestigungselement (48) aufgenommen werden.

9. Durchflußmeßgerät nach einem der Ansprüche 6 bis 8,
dadurch gekennzeichnet, daß die Flügelradeinrichtungen (42) bei der Vorwärtsbewegung von Material unter der Einwirkung der Reaktionskräfte gelenkig entgegengesetzt zur Drehrichtung (54) des Flügelradrotors (28) aus der Ruhestellung und in Richtung auf eine Nacheilposition bewegt werden, in der ein Gleichgewichtszustand zwischen den Zentrifugalkräften und den Reaktionskräften ausgebildet ist, wobei das Ausmaß der Winkelbewegung der Flügelradeinrichtungen (42) zwischen der Ruhestellung und der Nacheilposition durch die Sensoreinrichtung (56) als Maß für den Gewichtsdurchsatz des von dem Flügelradrotor (28) vorwärtsbewegten Materials festgestellt wird.

10. Durchflußmeßgerät nach einem der Ansprüche 6 bis 9,
dadurch gekennzeichnet, daß sich die Flügelradeinrichtungen (42) in der Ruhestellung allgemein radial bezüglich der Antriebswelle (30) erstrecken.

11. Durchflußmeßgerät nach einem der Ansprüche 1 bis 5 und gemäß der Alternative, bei der die Flügelradeinrichtungen (60, 62) einen Schwerpunkt aufweisen, der in einer Entfernung von der Drehachse (65) angeordnet ist,
dadurch gekennzeichnet, daß:
- die Antriebswelle (30) um eine Drehachse (65) drehbar ist und eine Lagereinrichtung (66) aufweist, die exzentrisch bezüglich dieser Drehachse (65) angeordnet ist,
- dir Flügelradeinrichtungen (60, 62) eine Hülse (64) umfassen, die drehbar auf den exzentrischen Lagereinrichtungen (66) befestigt ist, wobei der Mittelpunkt (67) dieser Hülse (64) gegenüber der Drehachse (65) versetzt ist, und
- die Flügelradeinrichtungen (60, 62) einen Schwerpunkt aufweisen, der in einer Entfernung von dem Mittelpunkt (67) der Hülse angeordnet ist.

12. Durchflußmeßgerät nach Anspruch 11,
dadurch gekennzeichnet, daß:
- in der Ruhestellung der Schwerpunkt der Flügelradeinrichtungen (60, 62) allgemein entlang oder in der Nähe der geraden Linie angeordnet ist, die sich durch die Drehachse (65) der Antriebswelle (30) und den Mittelpunkt (67) der Hülse erstreckt, und
- die Flügelradeinrichtungen (60, 62) bei der Vorwärtsbewegung von Material winkelmäßig unter dem Einfluß der Reaktionskräfte um die Lagereinrichtung (66) herum in der Richtung entgegengesetzt zur Drehrichtung (54) der Antriebswelle (30) aus der Ruhestellung heraus und in Richtung auf eine Nacheilposition verschoben werden, in der ein Gleichgewichtszustand zwischen den Zentrifugalkräften und den Reaktionskräften ausgebildet ist, wobei das Ausmaß der Winkelbewegung der Flügelradeinrichtungen (60, 62) zwischen der Ruhestellung und der Nacheilposition durch die Sensoreinrichtung (56) als Maß des Gewichtsdurchsatzes des Materials festgestellt wird, das von den Flügeleinrichtungen (60, 62) vorwärtsbewegt wird.

13. Durchflußmeßgerät nach Anspruch 11 oder 12,
dadurch gekennzeichnet, daß:
- die exzentrischen Lagereinrichtungen auf der Antriebswelle (30) durch eine exzentrische Nabe (66) gebildet sind, die mit der Welle (30) verkeilt ist, und
- die Flügelradeinrichtungen zwei diametral gegenüberliegende Flügelradschaufeln (60, 62) umfassen, die fest an der Hülse (64) befestigt sind, wobei eine der Schaufeln (60) schwerer als die andere Schaufel (62) ist, so daß der Schwerpunkt der Flügelradeinrichtungen (60, 62) gegenüber dem Hülsenmittelpunkt (67) versetzt ist.

14. Durchflußmeßgerät nach einem der Ansprüche 11 bis 13,
dadurch gekennzeichnet, daß:
- ein erstes Meßelement (70) fest an der Antriebswelle für eine Drehung mit dieser befestigt ist, und
- ein zweites Meßelement (76) fest mit den Flügelradeinrichtungen (60, 62) für eine Bewegung zusammen mit diesen befestigt ist, wobei die ersten und zweiten Meßelemente (70, 76) für eine Bewegung in der Nähe der Sensoreinrichtung angeordnet sind, um es der Sensoreinrichtung (56) zu ermöglichen, die Winkelversetzung zwischen den ersten und zweiten Meßelementen (70, 76) festzustellen.

15. Durchflußmeßgerät nach Anspruch 14,
dadurch gekennzeichnet, daß:
- die ersten und zweiten Meßelemente durch verzahnte Flansche (70, 76) gebildet sind, die an der Antriebswelle (30) bzw. den Flügelradeinrichtungen (60, 62) befestigt sind und sich nahe beieinander und allgemein parallel zueinander erstrecken, wobei sich die Zähne (74, 78) der Flansche (70, 76) bei Betrachtung in der Axialrichtung der Flügelradeinrichtungen (60, 62) allgemein überlappen, wenn sich die Flügelradeinrichtungen (60, 62) in der Ruhestellung befinden, während sie entsprechend der relativen Winkelbewegung der Flügelradeinrichtungen (60, 62) unter dem Einfluß der Reaktionskräfte gegeneinander versetzt werden, so daß, bei Betrachtung in der Axialrichtung, die Breite der Paare von sich überlappenden Zähnen (74, 78) entsprechend vergrößert wird, und
- die Sensoreinrichtung (56) so angeordnet ist, daß sie die Änderung dieser Breite als Maß für den Gewichtsdurchsatz des Materials feststellt, das von den Flügelradeinrichtungen (60, 62) vorwärtsbewegt wird.

16. Durchflußmeßgerät nach Anspruch 15,
dadurch gekennzeichnet, daß ein Anschlagteil (82) an einem der verzahnten Flansche (70, 76) derart befestigt ist, daß der andere Flansch hieran in Anlage kommt, wenn die Flansche (70, 76) gegeneinander über einen Winkel versetzt werden, der der Umfangsbreite des Abstandes (80) zwischen benachbarten Zähnen (74, 78) entspricht.

17. Durchflußmeßgerät nach einem der vorhergehenden Ansprüche,
dadurch gekennzeichnet, daß dieses Gerät auf einem Mähdrescher verwendet wird, um eine Gewichtsdurchsatzanzeige der Überkehr-Rückführungsströmung und/oder der Strömung des gereinigten Getreides in der Maschine während des Betriebsvorganges dieser Maschine zu liefern.

## Revendications

1. Dispositif (26) de mesure de débit pour mesurer le débit pondéral d'un flux de matières dans un moyen (22, 26, 24) d'acheminement pour l'acheminement d'une matière, comprenant:
- des moyens d'impulsion rotatifs (42/60, 62) montés à rotation autour d'un axe de rotation (-/65) sur un arbre d'entraînement (30); lesdits moyens d'impulsion (42/30, 62) étant mobiles par rapport à l'arbre d'entraînement, et étant manoeuvrables pour propulser des matières tout en étant soumis à des forces de réaction exercées par lesdites matières étant le résultat de ladite action de propulsion;
- un dispositif de rappel qui, lorsque le dispositif de mesure de débit (26) fonctionne, tend à positionner les moyens d'impulsion (42/60, 62) dans une position d'origine correspondant à la condition de fonctionnement à vide du dispositif de mesure de débit (26) et qui, lorsque des matières sont propulsées, permet auxdites forces de réaction de déplacer lesdits moyens d'impulsion (42/60, 62) à l'opposé de l'action du dispositif de rappel; la quantité de déplacement relatif étant indicative du débit pondéral du flux de matières;
- des moyens de détection (56) manoeuvrables pour détecter la quantité de déplacement du moyen d'impulsion (42/60, 62) par rapport à l'arbre d'entraînement (32) et pour produire un signal représentatif de celle-ci; et
- des moyens d'indication couplés fonctionnellement aux moyens de détection (56) pour réaliser une indication du débit pondéral du flux de matières;
ledit dispositif de mesure de flux (26) étant caractérisé en ce que:
- ledit dispositif de rappel est formé par les moyens d'impulsion (42) étant reliés à pivotement à l'arbre (30) d'entraînement, à un emplacement excentrique par rapport à celui-ci, ou par les moyens d'impulsion (60, 62) ayant un centre de gravité situé à distance dudit axe de rotation (65) ; et
- le dispositif étant tel que, durant la rotation des moyens d'impulsion (42/60, 62), des forces centrifuges agissant sur les moyens d'impulsion (42/60, 62) poussent ces moyens d'impulsion (42/60, 62) vers ladite position d'origine.

2. Dispositif de mesure de débit selon la revendication 1, caractérisé en ce qu'il comprend en outre un circuit à microprocesseur, auquel sont couplés le moyen (56) de détection et le moyen d'indication, afin de traiter des signaux reçus au départ du moyen (56) de détection, et de commander le moyen d'indication avec ceux-ci.

3. Dispositif de mesure de débit selon la revendication 2, caractérisé en ce que le microprocesseur est de plus également couplé à un moniteur de la vitesse de rotation et utilise les signaux reçus au départ du moyen (56) de détection pour commander ledit moniteur de la vitesse de rotation afin de réaliser une lecture de la vitesse de rotation de l'arbre d'entraînement.

4. Dispositif de mesure de débit selon l'une quelconque des revendications précédentes, caractérisé en ce que:
- les moyens (22, 26, 24) d'acheminement comprennent une vis (22) montée à rotation à l'intérieur d'une auge (20) de vis et incluant un arbre (32) de vis; et
- l'arbre d'entraînement des moyens (42/60, 62) d'impulsion est formé par un prolongement (30) axial de l'arbre (32) de la vis; l'agencement étant tel que, en fonctionnement, les moyens (42/60, 62) d'impulsion reçoivent une force motrice dudit arbre (32) de vis, et la vis (22) fournit des matières aux moyens (42/60, 62) d'impulsion, généralement dans la direction axiale de ceux-ci.

5. Dispositif de mesure de débit selon l'une quelconque des revendications précédentes, caractérisé en ce que les moyens (42/60, 62) d'impulsion sont montés à l'intérieur d'un logement (50) des moyens d'impulsion généralement cylindrique, comprenant une sortie (52) périphérique; les moyens (42/60, 62) d'impulsion étant manoeuvrables pour décharger des matières à travers ladite sortie (52) dans une direction généralement radiale.

6. Dispositif de mesure de débit selon l'une quelconque des revendications précédentes et selon l'alternative dans laquelle les moyens d'impulsion (42) sont reliés à pivotement à l'arbre (30) d'entraînement, à un emplacement excentrique par rapport à celui-ci, caractérisé en ce que les moyens (42) d'impulsion font partie d'un rotor (28) d'impulsion, comprenant en outre une pale (38) d'impulsion reliée rigidement à l'arbre (30) d'entraînement.

7. Dispositif de mesure de débit selon la revendication 6, caractérisé en ce que le rotor (28) d'impulsion comprend:
- un moyeu (36) central claveté à l'arbre (30) d'entraînement; la pale (38) d'impulsion étant reliée rigidement audit moyeu (36); et
- un organe (40) de montage relié rigidement audit moyeu (36) central, à un emplacement généralement diamétralement opposé à la pale (38) d'impulsion sur celui-ci; ledit moyen (42) d'impulsion étant relié à pivotement audit organe (40) de montage.

8. Dispositif de mesure de débit selon la revendication 7, caractérisé en ce que:
- l'organe (40) de montage est généralement en forme de U et comprend une perforation (46) de montage dans l'une des branches de celui-ci, et un élément (48) de montage creux maintenu sur l'autre jambe de celui-ci, en alignement axial avec ladite perforation (46) de montage, et pour ajustement dans la direction axiale par rapport à ladite perforation (46); et
- le moyen (42) d'impulsion comprend un pivot (44) d'articulation pourvu d'extrémités coniques d'orientation opposée, reçu à pivotement entre ladite perforation (46) de montage et ledit élément (48) de montage.

9. Dispositif de mesure de débit selon l'une quelconque des revendications 6 à 8, caractérisé en ce que, lors de la propulsion de matières, les moyens (42) d'impulsion sont pivotés sous l'influence desdites forces de réaction, à l'opposé de la direction (54) de rotation du rotor (28) d'impulsion au départ de ladite position d'origine et vers une position en recul dans laquelle un équilibre est réalisé entre lesdites forces centrifuges et lesdites forces de réaction; la quantité du déplacement angulaire du moyen (42) d'impulsion entre ladite position d'origine et ladite position en recul étant détectée par le moyen (56) de détection, en tant que mesure du débit pondéral des matières qui sont propulsées par le rotor (28) d'impulsion.

10. Dispositif de mesure de débit selon l'une quelconque des revendications 6 à 9, caractérisé en ce que, dans ladite position d'origine, les moyens (42) d'impulsion s'étendent de façon généralement radiale par rapport à l'arbre (30) d'entraînement.

11. Dispositif de mesure de débit selon l'une quelconque des revendications 1 à 5 et selon l'alternative dans laquelle les moyens d'impulsion (60, 62) ont un centre de gravité situé à distance dudit axe de rotation (65), caractérisé en ce que:
- l'arbre (30) d'entraînement tourne autour d'un axe (65) de rotation et comprenant des moyens (66) de paliers disposés excentriquement par rapport audit axe (65) de rotation;
- les moyens (60, 62) d'impulsion comprennent un manchon (64), monté à rotation sur les moyens (66) de paliers excentriques, grâce à quoi le centre (67) de ce manchon (64) est décalé par rapport audit axe (65) de rotation; et
- les moyens (60, 62) d'impulsion ont un centre de gravité positionné à une distance dudit centre (67) de manchon.

12. Dispositif de mesure de débit selon la revendication 11, caractérisé en ce que:
- dans ladite position d'origine, le centre de gravité des moyens (60, 62) d'impulsion se trouve généralement le long ou à proximité de la ligne droite s'étendant par ledit axe (65) de rotation de l'arbre (30) et par ledit centre (67) de manchon; et
- lorsqu'ils propulsent des matières, les moyens (60, 62) d'impulsion sont déplacés de façon angulaire sous l'influence desdites forces de réaction, autour desdits moyens (66) de paliers dans la direction opposée à la direction (54) de rotation de l'arbre (30) d'entraînement, au départ de ladite position d'origine et vers une position en recul dans laquelle un équilibre est établi entre lesdites forces centrifuges et lesdites forces de réaction; la quantité de déplacement angulaire des moyens (60, 62) d'impulsion entre ladite position d'origine et ladite position en recul étant détectée par le moyen (56) de détection en tant que mesure du débit pondéral des matières qui sont propulsées par les moyens (60, 62) d'impulsion.

13. Dispositif de mesure de débit selon la revendication 11 ou 12, caractérisé en ce que:
- les moyens de paliers excentriques sur l'arbre (30) d'entraînement sont formés par un moyeu (66) excentrique claveté sur ledit arbre (30) d'entraînement; et
- le moyen d'impulsion comprend une paire de pales (60, 62) d'impulsion diamétralement opposées, attachées fixement audit manchon (64); l'une desdites pales (60) étant plus lourde que l'autre (62), grâce à quoi le centre de gravité des moyens (60, 62) d'impulsion est décalé par rapport audit centre (67) de manchon;

14. Dispositif de mesure de débit selon l'une quelconque des revendications 11 à 13, caractérisé en ce que:
- un premier organe (70) de jaugeage est attaché fixement à l'arbre (30) d'entraînement pour rotation en union avec celui-ci;
- un deuxième organe (76) de jaugeage est attaché fixement aux moyens (60, 62) d'impulsion pour se mouvoir en union avec ceux-ci; ledit premier organe et ledit deuxième organe (70, 76) de jaugeage étant disposés pour se mouvoir à proximité du moyen (56) de détection, pour permettre audit moyen (56) de détection de détecter le déplacement angulaire entre ledit premier organe et ledit deuxième organe (70, 76).

15. Dispositif de mesure de débit selon la revendication 14, caractérisé en ce que:
- le premier et le deuxième organe de jaugeage sont formés par deux brides (70, 76) dentées attachées respectivement à l'arbre (30) d'entraînement et aux moyens (60, 62) d'impulsion, et s'étendant à proximité et de façon généralement parallèle l'une de l'autre; les dents (74, 78) desdites brides (70, 76), lorsque vues dans la direction axiale des moyens (60, 62) d'impulsion, se chevauchent généralement quand lesdits moyens (60, 62) d'impulsion se trouvent dans ladite position d'origine et qu'ils sont déplacés l'un par rapport à l'autre conformément au déplacement angulaire relatif des moyens (60, 62) d'impulsion sous l'influence desdites forces de réaction, grâce à quoi, lorsque vues dans ladite direction axiale, la largeur des paires de dents (74, 78) chevauchantes augmente en conséquence; et
- les moyens (56) de détection sont disposés pour détecter ladite variation de ladite largeur, en tant que mesure du débit pondéral des matières qui sont propulsées par les moyens (60, 62) d'impulsion.

16. Dispositif de mesure de débit selon la revendication 15, caractérisé en ce que un organe (82) de butée est attaché à l'une des brides (70, 76) dentées de manière à ce que l'autre bride dentée aboutisse contre celle-ci lorsque lesdites brides (70, 76) sont déplacées l'une par rapport à l'autre d'un angle correspondant à la largeur circonférentielle de l'espacement (80) entre des dents (74, 78) adjacentes.

17. Dispositif de mesure de débit selon l'une quelconque des revendications précédentes, caractérisé en ce que dispositif est utilisé sur une moissonneuse-batteuse pour réaliser une indication permanente du débit pondéral du flux de retour des ôtons et/ou du flux de grains nettoyés dans la machine.
